# DEMANDE DE BREVET EUROPEEN

(11) **EP 3 416 175 A1**
(43) Date de publication de la demande: **19.12.2018**
(21) Numéro de dépôt: 18176167.7
(22) Date de dépôt: 05.06.2018
(51) Int. Cl.: H01G 5/14, H01G 5/16, H01G 5/01

(54) **CONDENSATEUR À CAPACITÉ VARIABLE ÉLECTROMÉCANIQUE À QUATRE ÉLECTRODES**

(30) Priorité: 15.06.2017 FR 1755419
(71) Demandeur: Commissariat à l'Energie Atomique et aux Energies Alternatives, 75015 Paris (FR)
(72) Inventeur: PILLONNET, Gaël, 38360 SASSENAGE (FR); BASSET, Philippe, 94120 FONTENAY-SOUS-BOIS (FR); FANET, Hervé, 38420 REVEL (FR); SAMAALI, Hatem, 2034 EZZAHRA (TN)
(74) Mandataire: Cabinet Beaumont

(57) **Abrégé**

L'invention concerne un condensateur à capacité variable ayant des première (S) et deuxième (D) électrodes mobiles l'une par rapport à l'autre, et des troisième (R) et quatrième (G) électrodes isolées des première et deuxième électrodes, adaptées à recevoir un signal de commande (Ue) pour faire varier la position relative des première (S) et deuxième (D) électrodes de façon à faire varier la capacité entre les première (S) et deuxième (D) électrodes, le condensateur comprenant en outre un système de contrôle de la position de la deuxième électrode (D) par rapport à la première électrode (S), ledit système étant agencé pour que, pour au moins une position relative de la deuxième électrode (D) par rapport à la première électrode (S), la position de la deuxième électrode (D) par rapport à la première électrode (S) soit indépendante de la tension (Us) entre les première (S) et deuxième (D) électrodes.

## Description

### Domaine

La présente demande concerne le domaine des condensateurs à capacité variable. Elle vise plus particulièrement un condensateur à capacité variable électromécanique à quatre électrodes.

### Exposé de l'art antérieur

La demande de brevet français N°1562812 déposée le 18 décembre 2015 décrit des exemples de réalisation de circuits logiques à base de condensateurs à capacité variable, et plus particulièrement à base de condensateurs à capacité variable comportant deux électrodes principales séparées par une région isolante, et deux électrodes de commande isolées électriquement des électrodes principales et adaptées à recevoir un signal de commande pour faire varier la capacité entre les électrodes principales.

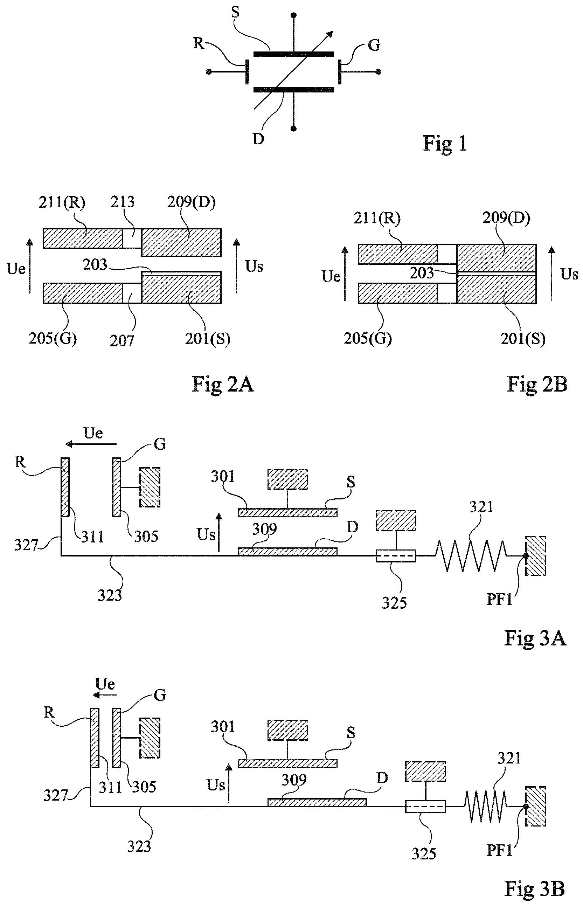

La figure 1 illustre de façon schématique un tel condensateur à quatre électrodes. Sur la figure 1, les électrodes principales sont désignées par les références S et D, et les électrodes de commande sont désignées par les références R et G. La capacité Cs entre les électrodes principales S et D du condensateur est fonction d'un signal électrique de commande appliqué entre ses électrodes de commande R et G.

La demande de brevet français N°1562812 susmentionnée décrit des exemples de réalisation de condensateurs à capacité variable à quatre électrodes de type électromécanique, c'est-à-dire dans lesquels les électrodes principales S et D sont mobiles l'une par rapport à l'autre, et le signal de commande appliqué entre les électrodes R et G permet de faire varier la position relative des électrodes S et D de façon à faire varier la capacité Cs.

Les figures 2A et 2B sont des vues en coupe d'un exemple d'un condensateur à capacité variable électromécanique à quatre électrodes du type décrit dans la demande de brevet français N°1562812.

Le condensateur des figures 2A et 2B comprend une partie fixe et une partie mobile.

La partie fixe comprend une plaque conductrice 201 formant la première électrode principale S du condensateur, et une couche diélectrique 203 revêtant une face de la plaque 201. La partie fixe du condensateur comprend en outre une plaque conductrice 205 solidaire mécaniquement de la plaque 201, formant la première électrode de commande G du condensateur. Les plaques 201 et 205 sont sensiblement parallèles entre elles et non superposées l'une à l'autre. Une pièce isolante 207 sépare la plaque 201 de la plaque 205 de façon que la plaque 201 soit isolée électriquement de la plaque 205.

La partie mobile du condensateur comprend une plaque conductrice 209 formant la deuxième électrode principale D du condensateur. La plaque 209 est sensiblement parallèle aux plaques 201 et 205, et est située en vis à vis de la plaque 201, du côté de la face de la plaque 201 revêtue par la couche diélectrique 203. La partie mobile du condensateur comprend en outre une plaque conductrice 211 solidaire mécaniquement de la plaque 209, formant la deuxième électrode de commande R du condensateur. Les plaques 209 et 211 sont sensiblement parallèles entre elles et non superposées l'une à l'autre. Une pièce isolante 213 sépare la plaque 209 de la plaque 211 de façon que la plaque 209 soit isolée électriquement de la plaque 211. La plaque 211 est située en vis-à-vis de la plaque 205, du même côté de la plaque 205 que la plaque 209.

La partie mobile du condensateur est susceptible de se déplacer par rapport à la partie fixe, en translation selon une direction sensiblement orthogonale aux plaques conductrices 205 et 201, de façon à rapprocher ou éloigner les plaques 209 et 211 des plaques 201 et 205. Un ressort de rappel (non représenté) peut être prévu pour, en l'absence de polarisation des électrodes du condensateur, maintenir les plaques conductrices 209 et 211 dans une position de repos, par exemple une position éloignée des plaques conductrices 201 et 205 tel qu'illustré par la figure 2A.

L'application d'une tension de commande Ue entre les électrodes G et R (référencée par rapport à l'électrode G), entraine l'apparition d'une force électrostatique entre les plaques conductrices 211 et 205, tendant à rapprocher la plaque 211 de la plaque 205, et donc la plaque 209 de la plaque 201, par exemple jusqu'à mettre en contact la plaque 209 avec la couche diélectrique 203 revêtant la plaque 201. Il en résulte une augmentation de la valeur de la capacité Cs formée entre les électrodes principales S et D du condensateur. Cette configuration est illustrée par la figure 2B. Une diminution de la tension de commande Ue conduit au contraire à éloigner la plaque 209 de la plaque 201, sous l'effet de la force exercée par le ressort de rappel, qui n'est alors plus compensée par la force électrostatique entre les plaques conductrices 211 et 205. Il en résulte une diminution de la valeur de la capacité Cs formée entre les électrodes S et D.

Une limitation du condensateur des figures 2A et 2B, et, plus généralement, de tous les exemples de condensateurs électromécaniques à capacité variable à quatre électrodes décrits dans la demande de brevet français N°1562812 susmentionnée, est que, quelle que soit la valeur du signal de commande appliqué entre les électrodes de commande du condensateur, la valeur de la capacité Cs dépend en fait non seulement de ce signal de commande, mais aussi de la tension Us appliquée entre les électrodes principales S et D du condensateur. En effet, l'application d'une tension Us entre les électrodes S et D entraine l'apparition d'une force électrostatique entre les plaques conductrices 201 et 209, qui peut conduire à rapprocher la plaque 209 de la plaque 201, ou au contraire à éloigner la plaque 209 de la plaque 201, modifiant ainsi la valeur de la capacité Cs.

Cette dépendance de la capacité Cs à la tension Us peut, dans certains cas, poser problème, dans les applications de logique capacitive décrites dans la demande de brevet français N°1562812.

Ainsi, il serait souhaitable de pouvoir disposer d'un condensateur électromécanique à capacité variable à quatre électrodes dans lequel, pour au moins une configuration du condensateur, la valeur de la capacité formée entre les électrodes principales du condensateur est indépendante de la tension appliquée entre lesdites électrodes principales.

### Résumé

Ainsi, un mode de réalisation prévoit un condensateur à capacité variable ayant des première et deuxième électrodes mobiles l'une par rapport à l'autre, séparées par une région isolante, et des troisième et quatrième électrodes isolées électriquement des première et deuxième électrodes, adaptées à recevoir un signal de commande pour faire varier la position relative des première et deuxième électrodes de façon à faire varier la capacité entre les première et deuxième électrodes, le condensateur comprenant en outre un système de contrôle de la position de la deuxième électrode par rapport à la première électrode, ledit système étant agencé pour que, pour au moins une position relative de la deuxième électrode par rapport à la première électrode, la position de la deuxième électrode par rapport à la première électrode soit indépendante de la tension appliquée entre les première et deuxième électrodes.

Selon un mode de réalisation :
la première électrode comprend deux premières plaques conductrices ;
la deuxième électrode comprend une deuxième plaque conductrice sensiblement parallèle aux premières plaques conductrices et disposée entre les premières plaques conductrices ; et
le système de contrôle est un système électrostatique tel que, pour au moins une configuration du condensateur, quelle que soit la tension appliquée entre les première et deuxième électrodes, la force électrostatique exercée sur la deuxième plaque conductrice par l'une des premières plaques conductrices compense la force électrostatique exercée sur la deuxième plaque conductrice par l'autre première plaque conductrice.

Selon un mode de réalisation, dans ladite au moins une configuration, la deuxième plaque conductrice est sensiblement à équidistance des deux premières plaques conductrices.

Selon un mode de réalisation, la deuxième plaque conductrice est mobile en translation selon une direction sensiblement orthogonale aux premières et deuxième plaques conductrices, de façon à faire varier la distance entre la deuxième plaque conductrice et les premières plaques conductrices sans faire varier la surface de la deuxième plaque conductrice en vis-à-vis des premières plaques conductrices.

Selon un mode de réalisation :
la première électrode comprend au moins une première plaque conductrice ;
la deuxième électrode comprend au moins une deuxième plaque conductrice sensiblement parallèle à la première plaque conductrice ; et
le système de contrôle relie mécaniquement la deuxième électrode à la première électrode de façon à autoriser un mouvement de la deuxième électrode par rapport à la première électrode en translation selon une direction sensiblement parallèle aux première et deuxième plaques conductrices, de façon à faire varier la surface de ladite au moins une deuxième plaque conductrice en vis-à-vis de ladite au moins une première plaque conductrice, et à empêcher ou limiter tout autre mouvement de la deuxième électrode par rapport à la première électrode.

Selon un mode de réalisation :
la première électrode comprend des première et deuxième pièces conductrices en vis-à-vis ayant chacune, en section transversale, une forme de peigne à dents simples ; et
la deuxième électrode comprend une troisième pièce conductrice située entre les première et deuxième pièces conductrices et ayant, en section transversale, une forme de peigne à dents doubles.

Selon un mode de réalisation, la troisième électrode comprend une troisième plaque conductrice solidaire mécaniquement de la deuxième électrode et la quatrième électrode comprend une quatrième plaque conductrice solidaire mécaniquement de la première électrode, les troisième et quatrième plaques conductrices étant sensiblement parallèles entre elles.

Selon un mode de réalisation, les troisième et quatrième électrodes sont des bornes conductrices solidaires mécaniquement de la première électrode, le condensateur comprenant en outre une bobine conductrice reliant les troisième et quatrième électrodes, et un aimant solidaire mécaniquement de la deuxième électrode, disposé à l'intérieur de la bobine.

Selon un mode de réalisation, le condensateur comporte un ressort de rappel agencé pour, en l'absence de signal électrique appliqué entre les troisième et quatrième électrodes et entre les première et deuxième électrodes, maintenir les première et deuxième électrodes dans une position de repos.

Selon un mode de réalisation, le ressort de rappel relie mécaniquement la deuxième électrode à un point solidaire mécaniquement de la première électrode, par l'intermédiaire d'une liaison glissière.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1, précédemment décrite, illustre schématiquement un condensateur à capacité variable à quatre électrodes ;
les figures 2A et 2B, précédemment décrites, sont des vues en coupe d'un exemple d'un condensateur à capacité variable électromécanique à quatre électrodes du type décrit dans la demande de brevet français N°1562812 ;
les figures 3A et 3B sont des vues en coupe d'un exemple d'un condensateur à capacité variable électromécanique à quatre électrodes selon un mode de réalisation ;
les figures 4A et 4B sont des vues en coupe d'un autre exemple d'un condensateur à capacité variable électromécanique à quatre électrodes selon un mode de réalisation ;
les figures 5A et 5B sont des vues en coupe d'un autre exemple d'un condensateur à capacité variable électromécanique à quatre électrodes selon un mode de réalisation ; et
la figure 6 est une vue en coupe d'un autre exemple d'un condensateur à capacité variable électromécanique à quatre électrodes selon un mode de réalisation.

### Description détaillée

De mêmes éléments ont été désignés par de mêmes références dans les différentes figures et, de plus, les diverses figures ne sont pas tracées à l'échelle. Par souci de clarté, seuls les éléments utiles à la compréhension des modes de réalisation décrits ont été représentés et sont détaillés. En particulier, les diverses utilisations qui peuvent être faites des condensateurs à capacité variable électromécaniques à quatre électrodes décrits dans la présente demande ne sont pas détaillées. Ces condensateurs sont particulièrement avantageux pour une utilisation dans des circuits de logique capacitive du type décrit dans la demande de brevet français N°1562812 susmentionnée, mais peuvent aussi avoir d'autres applications. A titre d'exemple, ces condensateurs peuvent être utilisés comme éléments capacitifs réglables dans des circuits de filtrage, par exemple dans des circuits LC à fréquence de résonance variable. Ils permettent alors avantageusement de pouvoir régler la fréquence de résonance du circuit indépendamment de la valeur de la composante de tension continue vue par le condensateur. Plus généralement, les modes de réalisation décrits sont compatibles avec la plupart des applications connues utilisant des condensateurs à capacité variable.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence à l'orientation des figures, étant entendu que, en pratique, les dispositifs décrits peuvent être orientés différemment. Sauf précision contraire, les expressions "approximativement", "sensiblement", et "de l'ordre de" signifient à 10 % près, de préférence à 5 % près, ou, lorsqu'elles se rapportent à des valeurs d'angles ou à des orientations, à 10° près, de préférence à 5° près.

Les figures 3A et 3B sont des vues en coupe illustrant un exemple d'un condensateur à capacité variable électromécanique à quatre électrodes selon un mode de réalisation.

Le condensateur des figures 3A et 3B comprend une partie fixe et une partie mobile.

La partie fixe comprend une plaque conductrice 301 formant la première électrode principale S du condensateur, et une plaque conductrice 305 solidaire mécaniquement de la plaque conductrice 301 mais isolée électriquement de la plaque 301, formant la première électrode de commande G du condensateur. On notera que dans la présente description, on entend par plaque conductrice une plaque en un matériau apte à conduire des charges électriques, ce matériau pouvant être un matériau conducteur, par exemple un métal, ou encore un matériau semiconducteur, par exemple du silicium.

La partie mobile du condensateur comprend une plaque conductrice 309 isolée électriquement des plaques conductrices 301 et 305, formant la deuxième électrode principale D du condensateur. La plaque conductrice 309 est sensiblement parallèle à la plaque conductrice 301. A titre d'exemple, les dimensions de la plaque conductrice 309 sont sensiblement identiques aux dimensions de la plaque conductrice 301. La partie mobile du condensateur comprend en outre une plaque conductrice 311 solidaire mécaniquement de la plaque conductrice 309 mais isolée électriquement de la plaque 309. La plaque conductrice 311 est en outre isolée électriquement des plaques conductrices 301 et 305. La plaque conductrice 311 forme la deuxième électrode de commande R du condensateur. La plaque 311 est sensiblement parallèle à la plaque 305 et est disposée en vis-à-vis de la plaque 305. Les plaques 311 et 305 ont par exemple des dimensions sensiblement identiques. A titre d'exemple, en projection selon un axe orthogonal aux plans des plaques 305 et 311, les plaques 305 et 311 sont sensiblement confondues.

Dans cet exemple, les plaques conductrices 311 et 305 sont disposées dans des plans sensiblement orthogonaux aux plans comprenant les plaques 301 et 309. La partie mobile du condensateur est susceptible de se déplacer en translation selon une direction sensiblement orthogonale aux plans des plaques 305 et 311 et parallèle aux plans des plaques 301 et 309. Ainsi, la plaque 311 peut s'éloigner ou se rapprocher de la plaque 305, et la plaque 309 peut se déplacer parallèlement à la plaque 301 de façon à faire varier la surface de la plaque 309 en vis-à-vis de la plaque 301. La distance entre la plaque 309 et la plaque 301 est en revanche sensiblement invariante.

Le condensateur des figures 3A et 3B comprend en outre un ressort de rappel 321 agencé pour, en l'absence de signal de commande appliqué entre les électrodes R et G, maintenir la partie mobile du condensateur dans une position de repos, par exemple une position dans laquelle la totalité de la surface de la plaque conductrice 309 est en vis-à-vis de la plaque 301 tel qu'illustré par la figure 3A.

Dans l'exemple représenté, la partie mobile du condensateur comprend une première poutre 323 reliée à un point fixe PF1 par l'intermédiaire du ressort de rappel 321 et d'une liaison glissière 325. La plaque conductrice 309 est montée solidaire de la poutre 323, parallèlement à l'axe longitudinal de la poutre 323. A titre d'exemple, le ressort 321 est un ressort de traction ou de compression dont une extrémité est reliée au point fixe PF1 et dont l'autre extrémité est reliée à la poutre 323 par l'intermédiaire de la liaison glissière 325. Dans cet exemple, l'axe de la liaison glissière est sensiblement parallèle à l'axe longitudinal de la poutre. Ainsi, la poutre 323 peut se déplacer uniquement en translation selon son axe longitudinal. Dans cet exemple, la partie mobile du condensateur comprend en outre une deuxième poutre 327 solidaire de la poutre 323 et disposée selon un axe longitudinal sensiblement orthogonal à celui de la poutre 323. La plaque conductrice 311 est montée solidaire de la poutre 327, parallèlement à l'axe longitudinal de la poutre 327.

L'application d'une tension de commande Ue entre les électrodes G et R (référencée par rapport à l'électrode G), entraine l'apparition d'une force électrostatique entre les plaques conductrices 311 et 305, tendant à rapprocher la plaque 311 de la plaque 305. Ceci entraine un déplacement de la plaque conductrice 309 parallèlement à la plaque conductrice 301, sans modification de la distance entre la plaque 309 et la plaque 301. Il en résulte une variation de la surface de la plaque 309 en vis-à-vis de la plaque 301, et donc une variation correspondante de la capacité Cs du condensateur entre ses électrodes principales S et D, la capacité Cs étant proportionnelle à la surface de la plaque 309 en vis-à-vis de la plaque 301. Cette configuration est illustrée par la figure 3B. Une diminution de la tension de commande Ue conduit au contraire à ramener la plaque conductrice 309 vers sa position de repos, et donc à ramener la capacité Cs vers sa valeur initiale.

Un avantage du condensateur des figures 3A et 3B est que, quelle que soit la valeur de la tension de commande Ue appliquée entre les électrodes de commande R et G du condensateur, la valeur de la capacité Cs est indépendante de la valeur de la tension Us appliquée entre les électrodes principales S et D du condensateur. Ceci résulte du fait que la plaque conductrice 309 constituant l'électrode D ne peut se déplacer que parallèlement à la plaque conductrice 301 constituant l'électrode S. La force électrostatique exercée par la plaque 301 sur la plaque 309 sous l'effet de la tension Us, quelle que soit la valeur de la tension Us, étant une force orthogonale à la plaque 309, cette force n'entraine aucun déplacement de la plaque 309 par rapport à la plaque 301, et donc aucune variation de la capacité Cs.

On notera que dans l'exemple des figures 3A et 3B, la liaison glissière 325 est optionnelle. Plus généralement, la liaison glissière 325 peut être remplacée par tout autre élément de liaison mécanique entre la plaque conductrice mobile 309 et la plaque conductrice fixe 301, apte à autoriser un mouvement de translation de la plaque 309 parallèlement à la plaque 301 et s'opposant à toute variation de distance entre la plaque 309 et la plaque 301. A titre d'exemple, la liaison glissière 325 peut être remplacée par un ressort (non représenté), par exemple une lame métallique, ayant, selon un axe principal sensiblement orthogonal à la poutre 323, une première extrémité fixée à la poutre 323 et une deuxième extrémité fixée à la partie fixe du condensateur, ce ressort présentant une raideur relativement élevée selon son axe principal et relativement faible selon l'axe de la poutre 323.

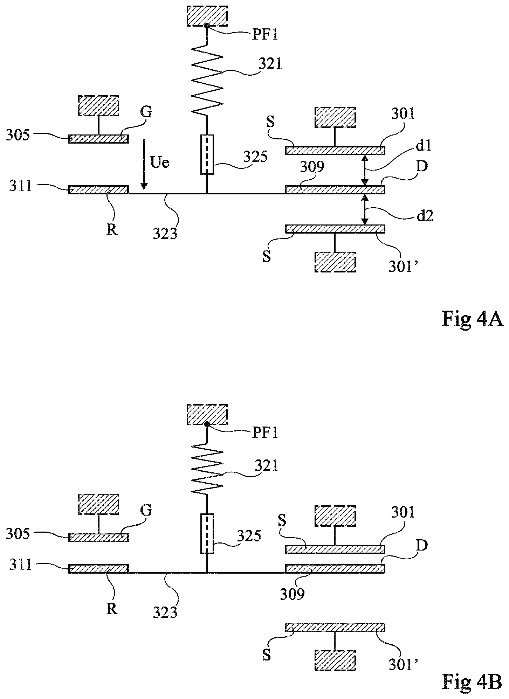

Les figures 4A et 4B sont des vues en coupe illustrant un autre exemple d'un condensateur à capacité variable électromécanique à quatre électrodes selon un mode de réalisation.

Le condensateur des figures 4A et 4B comprend une partie fixe et une partie mobile.

La partie fixe comprend deux plaques conductrices parallèles 301 et 301'. La plaque 301' est disposée en vis-à-vis de la plaque 301. A titre d'exemple, les plaques 301 et 301' ont sensiblement les mêmes dimensions, et sont, en projection selon un axe orthogonal aux plans des plaques 301 et 301', sensiblement confondues. La plaque conductrice 301' est connectée électriquement à la plaque conductrice 301 par une liaison conductrice non visible sur les figures, et constitue avec la plaque 301 l'électrode S du condensateur.

La partie fixe du condensateur des figures 4A et 4B comprend en outre une plaque conductrice 305 solidaire mécaniquement des plaques conductrices 301 et 301' mais isolée électriquement des plaques 301 et 301', formant la première électrode de commande G du condensateur.

La partie mobile du condensateur comprend une plaque conductrice 309 isolée électriquement des plaques conductrices 301, 301' et 305, formant la deuxième électrode principale D du condensateur. La plaque conductrice 309 est sensiblement parallèle aux plaques conductrices 301 et 301' et est disposée entre les plaques 301 et 301'. A titre d'exemple, les dimensions de la plaque conductrice 309 sont sensiblement identiques aux dimensions des plaques conductrices 301 et 301', et, en projection selon un axe orthogonal aux plans des plaques 301, 301' et 309, les plaques 301, 301' et 309 sont sensiblement confondues.

La partie mobile du condensateur comprend en outre une plaque conductrice 311 solidaire mécaniquement de la plaque conductrice 309 mais isolée électriquement de la plaque 309. La plaque conductrice 311 est en outre isolée électriquement des plaques conductrices 301, 301' et 305. La plaque conductrice 311 forme la deuxième électrode de commande R du condensateur. La plaque 311 est sensiblement parallèle à la plaque 305 et est disposée en vis-à-vis de la plaque 305. Les plaques 311 et 305 ont par exemple des dimensions sensiblement identiques. A titre d'exemple, en projection selon un axe orthogonal aux plans des plaques 305 et 311, les plaques 305 et 311 sont sensiblement confondues.

Dans cet exemple, les plaques conductrices 311 et 305 sont disposées dans des plans sensiblement parallèles aux plans comprenant les plaques 301, 301' et 309. La partie mobile du condensateur est susceptible de se déplacer en translation selon une direction sensiblement orthogonale aux plans des plaques 305 et 311 et aux plans des plaques 301, 301' et 309. Ainsi, la plaque 311 peut se rapprocher de la plaque 305, conduisant à rapprocher la plaque 309 de la plaque 301 et à éloigner la plaque 309 de la plaque 301', ou s'éloigner de la plaque 305, conduisant à éloigner la plaque 309 de la plaque 301 et à rapprocher la plaque 309 de la plaque 301'. La surface de la plaque 309 en vis-à-vis des plaques 301 et 301' est en revanche sensiblement invariante dans cet exemple.

Le condensateur des figures 4A et 4B comprend en outre un ressort de rappel 321 agencé pour, en l'absence de signal de commande appliqué entre les électrodes R et G, maintenir la partie mobile du condensateur dans une position de repos, par exemple une position dans laquelle la distance entre la plaque 309 et la plaque 301 est sensiblement égale à la distance entre la plaque 309 et la plaque 301' tel qu'illustré par la figure 4A.

Dans l'exemple représenté, la partie mobile du condensateur comprend une poutre 323 reliée à un point fixe PF1 par l'intermédiaire du ressort de rappel 321 et d'une liaison glissière 325. Les plaques conductrices 309 et 311 sont montées solidaires de la poutre 323, parallèlement à l'axe longitudinal de la poutre 323. A titre d'exemple, le ressort 321 est un ressort de traction ou de compression dont une extrémité est reliée au point fixe PF1 et dont l'autre extrémité est reliée à la poutre 323 par l'intermédiaire de la liaison glissière 325. Dans cet exemple, l'axe de la liaison glissière est sensiblement orthogonal à l'axe longitudinal de la poutre. Ainsi, la poutre 323 peut se déplacer uniquement en translation selon un axe orthogonal aux plans des plaques 301, 301', 309, 305 et 311.

L'application d'une tension de commande Ue entre les électrodes G et R (référencée par rapport à l'électrode G), entraine l'apparition d'une force électrostatique entre les plaques conductrices 311 et 305, tendant à rapprocher la plaque 311 de la plaque 305, et donc la plaque 309 de la plaque 301, sans modification de la surface de la plaque 309 en vis-à-vis des plaques 301 et 301'. Cette configuration est illustrée par la figure 4B. Dans la mesure où la capacité Cs est égale à la somme de la capacité Cs1 formée entre les plaques 309 et 301 et de la capacité Cs2 formée entre les plaques 309 et 301', et où les capacités Cs1 et Cs2 sont respectivement inversement proportionnelle à la distance d1 entre les plaques 309 et 301 et inversement proportionnelle à la distance d2 entre les plaques 309 et 301', il en résulte une augmentation de la capacité Cs.

Une diminution de la tension de commande Ue conduit au contraire à ramener la plaque conductrice 309 vers sa position de repos, et donc à ramener la capacité Cs vers sa valeur initiale.

Un avantage du condensateur des figures 4A et 4B est que lorsque la plaque 309 est à équidistance des plaques 301 et 301' (configuration de la figure 4A), la valeur de la capacité Cs est indépendante de la valeur de la tension Us appliquée entre les électrodes principales S et D du condensateur. Ceci résulte du fait que, dans cette configuration, la force électrostatique exercée sur la plaque 309 par la plaque 301 est compensée par la force électrostatique exercée sur la plaque 309 par la plaque 301'. Ainsi, la force électrostatique totale exercée sur la plaque 309 par l'électrode S orthogonalement au plan de la plaque 309, du fait de l'application d'une tension Us entre les électrodes D et S, est sensiblement nulle.

On notera que dans l'exemple des figures 4A et 4B, la liaison glissière 325 est optionnelle. A titre d'exemple, le ressort 321 peut être choisi pour présenter une raideur relativement élevée selon l'axe de la poutre 323, de façon à empêcher tout mouvement significatif de la plaque 309 parallèlement aux plaques 301 et 301'.

Par ailleurs, les modes de réalisation décrits ne se limitent pas au cas particulier mentionné ci-dessus dans lequel la plaque 309 est à équidistance des plaques 301 et 301' à la position de repos du condensateur, c'est-à-dire lorsqu'aucun signal n'est appliqué entre les électrodes R et G et entre les électrodes D et S. A titre de variante, au repos, la plaque 309 est plus proche de la plaque 301 que de la plaque 301', ou inversement.

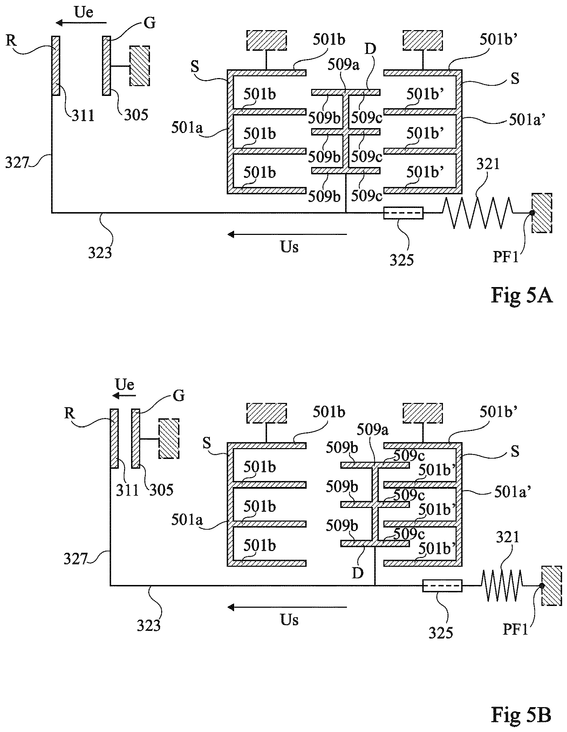

Les figures 5A et 5B sont des vues en coupe illustrant un autre exemple d'un condensateur à capacité variable électromécanique à quatre électrodes selon un mode de réalisation.

Le condensateur des figures 5A et 5B comprend des éléments communs avec le condensateur des figures 3A et 3B, et diffère du condensateur des figures 3A et 3B essentiellement par la forme de ses électrodes principales S et D.

Dans le condensateur des figures 5A et 5B, l'électrode S est constituée de deux pièces conductrices disjointes 501 et 501', connectées entre elles par une liaison conductrice non visible sur les figures, et l'électrode D est constituée d'une unique pièce conductrice 509.

En vue en coupe transversale, c'est-à-dire dans le plan de coupe des figures 5A et 5B, chacune des pièces conductrices 501 et 501' a la forme d'un peigne à dents simples. Autrement dit, chacune des pièces 501 et 501' comprend une plaque conductrice 501a (respectivement 501a'), correspondant à la barre du peigne, et une pluralité de plaques conductrices 501b (respectivement 501b') sensiblement parallèles entre elles et orthogonales à la plaque 501a (respectivement 501a'), correspondant aux dents du peigne. Les plaques 501b (respectivement 501b') ont par exemple toutes sensiblement les mêmes dimensions. Toutes les plaques 501b (respectivement 501b') sont fixées par un bord à une même face de la plaque 501a (respectivement 501a'). A titre d'exemple, en projection dans le plan d'une plaque 501b (respectivement 501b'), toutes les plaques 501b (respectivement 501b') sont confondues. Les pièces conductrices 501 et 501' sont par exemple sensiblement identiques. Dans cet exemple, les pièces conductrices 501 et 501' sont disposées en vis-à-vis l'une de l'autre. Plus particulièrement, les plaques 501a et 501a' sont sensiblement parallèles entre elles et en vis-à-vis l'une de l'autre, les plaques 501b étant situées du côté de la face de la plaque 501a tournée vers la plaque 501a' et les plaques 501b' étant situées du côté de la face de la plaque 501a' tournée vers la plaque 501a.

Dans l'exemple des figures 5A et 5B, la pièce conductrice 509 a, en vue en coupe transversale, la forme d'un peigne à dents doubles. Autrement dit, la pièce 509 comprend une plaque conductrice 509a, correspondant à la barre du peigne, une pluralité de plaques conductrices 509b sensiblement parallèles entre elles et orthogonales à la plaque 509a, correspondant à des premières dents du peigne, et une pluralité de plaques conductrices 509c sensiblement parallèles aux plaques 509b, correspondant à des deuxièmes dents du peigne. A titre d'exemple, les plaques 509b et 509c ont toutes sensiblement les mêmes dimensions. Toutes les plaques 509b sont fixées par un bord à une même première face de la plaque 509a, et toutes les plaques 509c sont fixées par un bord à une même deuxième face, opposée à la première face, de la plaque 509a. A titre d'exemple, chaque plaque 509b est alignée avec une plaque 509c, c'est-à-dire que chaque plaque 509b se situe sensiblement dans le même plan qu'une plaque 509c. A titre d'exemple, en projection dans le plan d'une plaque 509b, toutes les plaques 509b sont confondues, et, en projection dans le plan d'une plaque 509c, toutes les plaques 509c sont confondues.

Dans le condensateur des figures 5A et 5B, la pièce conductrice 509 est disposée entre les pièces conductrices 501 et 501'. Plus particulièrement, la plaque 509a est sensiblement parallèle aux plaques 501a et 501a', et est située entre les plaques 501a et 501a' . Les plaques 509b de la pièce 509 sont situées du côté de la face de la plaque 509a tournée vers la plaque 501a, et les plaques 509c de la pièce 509 sont situées du côté de la face de la plaque 509a tournée vers la plaque 501a'. Chaque dent 509b du peigne 509 est située en vis-à-vis d'un espace libre séparant deux dents voisines du peigne 501, et chaque dent 509c du peigne 509 est située en vis-à-vis d'un espace libre séparant deux dents voisines du peigne 501'. Chaque dent 509b, respectivement 509c du peigne 509 est en outre située sensiblement à équidistance desdites dents voisines 501b, respectivement 501b' du peigne 501, respectivement 501'.

Dans l'exemple des figures 5A et 5B, les plaques 501a, 509a et 501a' des pièces 501, 509 et 501' sont sensiblement parallèles aux plaques conductrices 305 et 311 formant les électrodes G et R du condensateur (étant entendu que la plaque 305 est solidaire mécaniquement des pièces 501 et 501' et isolée électriquement des pièces 501, 501', 509 et 311, et que la plaque 311 est solidaire mécaniquement de la pièce 509 et isolée électriquement des pièces 501, 501', 509 et 305). Les plaques 501b, 509b, 509c et 501b' ont quant à elles sensiblement la même orientation que les plaques 301 et 309 du condensateur des figures 3A et 3B.

Comme dans l'exemple des figures 3A et 3B, la partie mobile du condensateur est susceptible de se déplacer en translation selon une direction sensiblement orthogonale aux plans des plaques 305 et 311, c'est-à-dire parallèlement aux plans des plaques 501b, 509b, 509c et 501b'. Ainsi, la plaque 509a peut s'éloigner de la plaque 501a et se rapprocher de la plaque 501a', ou se rapprocher de la plaque 501a et s'éloigner de la plaque 501a'. En revanche, la distance entre les plans des plaques 509b et 509c et les plans des plaques 501b et 501b' est invariante.

Dans l'exemple des figures 5A et 5B, le ressort de rappel 321 est agencé pour, en l'absence de signal de commande appliqué entre les électrodes R et G, maintenir la partie mobile du condensateur dans une position de repos dans laquelle la plaque 509a de l'électrode D est sensiblement à équidistance des plaques 501a et 501a' de l'électrode S, tel qu'illustré par la figure 5A.

L'application d'une tension de commande Ue entre les électrodes G et R (référencée par rapport à l'électrode G), entraine l'apparition d'une force électrostatique entre les plaques conductrices 311 et 305, tendant à rapprocher la plaque 311 de la plaque 305. Ceci conduit à rapprocher la plaque 509a de la plaque 501a' et à l'éloigner de la plaque 501a. Le condensateur est alors placé dans un état tel qu'illustré par la figure 5B, dans lequel le peigne 509 est imbriqué dans le peigne 501', et non imbriqué dans le peigne 501. La capacité Cs du condensateur est alors supérieure à sa capacité Cs à l'état de repos. En effet, bien que le rapprochement entre les plaques conductrices 509 et 501a' soit compensé par l'éloignement entre les plaques conductrices 509 et 501a, l'imbrication entre les dents 509c du peigne 509 et les dents 501b' du peigne 501' entraine une augmentation de la capacité Cs qui n'est pas compensée par l'éloignement entre les dents 509b du peigne 509 et les dents 501b du peigne 501.

Par rapport aux exemples des figures 3A et 3B, une particularité du condensateur des figures 5A et 5B est que, comme pour le condensateur des figures 4A et 4B, il existe une unique configuration du condensateur dans laquelle la valeur de la capacité Cs est indépendante de la tension Us appliquée entre les électrodes principales S et D du condensateur, à savoir la configuration de la figure 5A dans laquelle la plaque conductrice 509a de l'électrode D est à équidistance des plaques conductrices 501a et 501a' de l'électrode S. En effet, dès lors que la plaque 509a est plus proche de la plaque 501a' que de la plaque 501a, la force électrostatique liée à la tension Us, exercée sur la pièce 509 par la pièce 501' n'est plus strictement compensée par la force électrostatique exercée sur la pièce 509 par la pièce 501, ce qui conduit à ce que la valeur de la capacité Cs soit dépendante de la valeur de la tension Us.

Ce type de fonctionnement dans lequel le capacité Cs du condensateur est, dans une première configuration, indépendante de la tension Us appliquée entre les électrodes principales du condensateur, et, dans une deuxième configuration, dépendante de la tension Us appliquée entre les électrodes principales du condensateur, présente un intérêt pour certaines applications, et en particulier pour une utilisation dans des circuits de logique capacitive adiabatique du type décrit dans la demande de brevet français N°1562812 susmentionnée.

On notera que dans l'exemple représenté sur les figures 5A et 5B, en position d'équilibre ou position de repos (figure 5A), le peigne 509 n'est pas imbriqué dans les peignes 501 et 501'. A titre de variante, le peigne 509 peut être partiellement imbriqué dans les peignes 501 et 501' à la position d'équilibre.

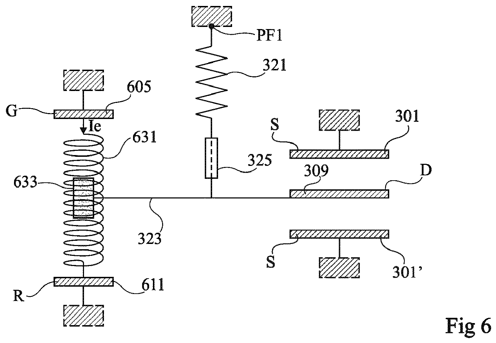

La figure 6 est une vue en coupe illustrant un autre exemple d'un condensateur à capacité variable électromécanique à quatre électrodes selon un mode de réalisation. Le condensateur de la figure 6 comprend des éléments communs avec le condensateur des figures 4A et 4B. Dans la suite, seules les différences entre les deux condensateurs seront détaillées.

Le condensateur de la figure 6 diffère du condensateur des figures 4A et 4B principalement en ce que son actionnement est de type électromagnétique, et non électrostatique comme dans l'exemple des figures 4A et 4B.

Plus particulièrement, dans le condensateur de la figure 6, les plaques conductrices 305 et 311 sont remplacées par un ensemble comprenant une borne conductrice 605, correspondant à l'électrode G du condensateur, une borne conductrice 611, correspondant à l'électrode R du condensateur, une bobine conductrice 631 dont une première extrémité est connectée à la borne 605 et dont une deuxième extrémité est connectée à la borne 611, et un aimant 633 disposé à l'intérieur de la bobine 631.

Dans cet exemple, les bornes 605 et 611 et la bobine 631 sont des éléments de la partie fixe du condensateur, et l'aimant 633 est un élément de la partie mobile du condensateur. Autrement dit, les bornes 605 et 611 et la bobine 631 sont solidaires mécaniquement de la plaque conductrice 301 formant l'électrode S du condensateur, et l'aimant 631 est solidaire mécaniquement de la plaque conductrice 309 formant l'électrode D du condensateur. Plus particulièrement, dans l'exemple représenté, l'aimant 633 est monté solidaire de la poutre 323. Dans cet exemple, l'axe central de la bobine 631 est sensiblement orthogonal aux plaques conductrices 301, 301' et 309.

L'application d'un courant de commande Ie dans la bobine 631 par l'intermédiaire des électrodes G et R entraine un déplacement de l'aimant 633 le long de l'axe central de la bobine. Ceci entraine un déplacement de la plaque conductrice 309 orthogonalement aux plaques conductrices 301 et 301', sans modification de la surface de la plaque 309 en vis-à-vis des plaques 301 et 301'. Il en résulte une variation de la distance entre la plaque 309 et la plaque 301, et donc une variation correspondante de la capacité Cs du condensateur entre ses électrodes principales S et D.

Ainsi, à la différence du condensateur des figures 4A, 4B qui est commandé en tension, le condensateur de la figure 6 est commandé en courant.

Bien entendu, le mécanisme d'actionnement électromagnétique du condensateur de la figure 6 peut aussi être appliqué aux condensateurs des figures 3A, 3B et 5A, 5B, en remplacement du mécanisme d'actionnement électrostatique décrit.

Plus généralement, d'autres mécanismes d'actionnement électromécaniques peuvent être prévus, par exemple à base d'éléments piézoélectriques. On notera de plus que bien que l'on ait décrit uniquement des exemples de mécanismes d'actionnement électrostatiques dans lesquels les plaques conductrices 305 et 311 formant les électrodes G et R sont parallèles et se déplacent l'une par rapport à l'autre selon une direction orthogonale auxdites plaques (c'est-à-dire sans variation de la surface de la plaque 305 en vis-à-vis de la plaque 311), d'autres mécanismes d'actionnement électrostatiques peuvent être prévus. En particulier, on pourra prévoir un mécanisme d'actionnement électrostatique dans lequel les plaques 305 et 311 formant les électrodes G et R sont parallèles mais se déplacent l'une par rapport à l'autre selon une direction parallèle aux plaques (c'est-à-dire avec variation de la surface de la plaque 305 en vis-à-vis de la plaque 311).

Des modes de réalisation particuliers ont été décrits. Diverses variantes et modifications apparaîtront à l'homme de l'art. En particulier, bien que l'on ait représenté sur les figures uniquement des exemples de réalisation dans lesquels les plaques conductrices formant les électrodes du condensateur présentent des faces sensiblement lisses, les modes de réalisation décrits ne se limitent pas à ce cas particulier. A titre de variante, les plaques conductrices formant les électrodes du condensateur, et en particulier ses électrodes principales S et D, peuvent présenter des structurations, par exemple de forme triangulaire ou en créneau, de façon à augmenter les surfaces en vis-à-vis des plaques conductrices, et ainsi augmenter la capacité du condensateur.

Par ailleurs, les modes de réalisation décrits ne se limitent pas aux exemples particuliers de montages mécaniques représentés sur les figures. L'homme du métier saura prévoir d'autres montages permettant d'obtenir les mouvements relatifs recherchés entre les éléments de la partie mobile et les éléments de la partie fixe du condensateur.

De plus, l'homme du métier saura adapter le montage en fonction du comportement souhaité du condensateur, pour obtenir soit un condensateur à variation de capacité positive, c'est-à-dire dans lequel la valeur de la capacité Cs augmente lorsque la valeur du signal de commande Ue ou Ie appliqué entre les électrodes de commande R et G augmente, soit un condensateur à variation de capacité négative, c'est-à-dire dans lequel la valeur de la capacité Cs diminue lorsque la valeur du signal de commande Ue ou Ie augmente.

## Revendications

1. Condensateur à capacité variable ayant des première (S) et deuxième (D) électrodes mobiles l'une par rapport à l'autre, séparées par une région isolante, et des troisième (R) et quatrième (G) électrodes isolées électriquement des première et deuxième électrodes, adaptées à recevoir un signal de commande (Ue, Ie) pour faire varier la position relative des première (S) et deuxième (D) électrodes de façon à faire varier la capacité (Cs) entre les première (S) et deuxième (D) électrodes,
dans lequel :
la première électrode (S) comprend des première (301 ; 501a, 501b) et deuxième (301' ; 501a', 501b') pièces conductrices fixes l'une par rapport à l'autre et connectées électriquement l'une à l'autre ;
la deuxième électrode (D) comprend une troisième pièce conductrice (309 ; 509a, 509b) mobile par rapport aux première et deuxième pièces conductrices, la position de la troisième pièce conductrice par rapport aux première et deuxième pièces conductrices étant fonction du signal de commande appliqué entre les troisième (R) et quatrième (G) électrodes ; et
il existe au moins une position de la troisième pièce conductrice par rapport aux première et deuxième pièces conductrices pour laquelle, quelle que soit la tension (Us) appliquée entre les première (S) et deuxième (D) électrodes, la force électrostatique exercée sur la troisième pièce conductrice par la première pièce conductrice compense la force électrostatique exercée sur la troisième pièce conductrice par la deuxième pièce conductrice.

2. Condensateur selon la revendication 1, dans lequel les première (301), deuxième (301') et troisième (309) pièces conductrices sont respectivement des première, deuxième et troisième plaques conductrices sensiblement parallèles les unes aux autres, la troisième plaque conductrice étant disposée entre les première et deuxième plaques conductrices, en vis-à-vis des première et deuxième plaques conductrices.

3. Condensateur selon la revendication 2, dans lequel la distance entre la troisième plaque conductrice (309) et les première (301) et deuxième (301') plaques conductrices est variable et dans lequel la surface de la troisième plaque conductrice en vis-à-vis des première et deuxième plaques conductrices est fixe.

4. Condensateur selon la revendication 2 ou 3, dans lequel ladite au moins une position est telle que la troisième plaque conductrice (309) soit à équidistance des première (301) et deuxième (301') plaques conductrices.

5. Condensateur selon la revendication 1, dans lequel :
les première (501) et deuxième (501') pièces conductrices ont chacune, en section transversale, une forme de peigne à dents simples ; et
la troisième pièce conductrice (509) est située entre les première (501) et deuxième (501') pièces conductrices et a, en section transversale, une forme de peigne à dents doubles.

6. Condensateur selon l'une quelconque des revendications 1 à 5, dans lequel la troisième électrode (R) comprend une quatrième plaque conductrice (311) solidaire mécaniquement de la deuxième électrode (D) et la quatrième électrode (G) comprend une cinquième plaque conductrice (305) solidaire mécaniquement de la première électrode (S), les quatrième (311) et cinquième (305) plaques conductrices étant sensiblement parallèles entre elles.

7. Condensateur selon l'une quelconque des revendications 1 à 5, dans lequel les troisième (R) et quatrième (G) électrodes sont des bornes conductrices (611, 605) solidaires mécaniquement de la première électrode (S), le condensateur comprenant en outre une bobine conductrice (633) reliant les troisième (R) et quatrième (G) électrodes, et un aimant solidaire mécaniquement de la deuxième électrode (D), disposé à l'intérieur de la bobine (633).

8. Condensateur selon l'une quelconque des revendications 1 à 7, comportant un ressort de rappel (321) agencé pour, en l'absence de signal électrique appliqué entre les troisième (R) et quatrième (G) électrodes et entre les première (S) et deuxième (D) électrodes, maintenir les première (S) et deuxième (D) électrodes dans une position de repos.

9. Condensateur selon la revendication 8, dans lequel le ressort de rappel (321) relie mécaniquement la deuxième électrode (D) à un point (PF1) solidaire mécaniquement de la première électrode (S), par l'intermédiaire d'une liaison glissière (325).
